# EUROPEAN PATENT APPLICATION

(11) **EP 4 249 270 A1**
(43) Date of publication of application: **27.09.2023**
(21) Application number: 23163208.4
(22) Date of filing: 21.03.2023
(51) Int. Cl.: B41J 3/407, B41J 3/28

(54) **LIQUID APPLICATION APPARATUS, LIQUID APPLICATION METHOD, AND CARRIER MEDIUM**

(30) Priority: 23.03.2022 JP 2022046705
(71) Applicant: Ricoh Company, Ltd., Tokyo 143-8555 (JP)
(72) Inventor: KAWASHIMA, Yasunari, Tokyo, 143-8555 (JP); YAMAZAKI, Kimiharu, Toyko, 143-8555 (JP); KIMURA, Tomoaki, Tokyo, 143-8555 (JP); IKEDA, Takashi, Tokyo, 143-8555 (JP)
(74) Representative: SSM Sandmair

(57) **Abstract**

A liquid application apparatus (1) sequentially moves to each of a plurality of divided areas obtained by dividing a liquid application area and discharges liquid to connect images. The liquid application apparatus (1) includes an imager (8) and an image connection measuring unit (51). The imager (8) reads a reference position set in an area where end portions of the plurality of divided areas overlap with each other. The image connection measuring unit (51) sets the reference position to a reference origin of image writing.

## Description

### BACKGROUND

### Technical Field

Embodiments of the present disclosure relate to a liquid application apparatus, a liquid application method, and a storage medium.

### Related Art

When a white line, a character, or a symbol is printed on a road surface, a printing area is larger than an area in which a carriage of a printing apparatus can move. Accordingly, the printing apparatus itself moves to each of a plurality of divided areas obtained by dividing the printing area and performs printing to connect a plurality of images. When the printing apparatus moves to perform printing as described above, the printing apparatus itself and the carriage with a print head mounted thereon moves to a predetermined position to perform printing. As a result, the accuracy of self-position estimation of each of the printing apparatus and the carriage obviously appears at joints of images and greatly affects printing image qualities.

A technique is known that determines a moving position of a moving object to control the moving object based on the feature of an image on a road surface (for example, Japanese Unexamined Patent Application Publication No. 2016-166853).

However, according to a self-position estimation method in the related art, when the accuracy of self-position estimation is low, joints of images are noticeable.

### SUMMARY

In view of the situation described above, an object of the present disclosure is to implement liquid application with less noticeable joints of images.

Embodiments of the present disclosure described herein provide a novel liquid application apparatus including an imager and an image connection measuring unit. The liquid application apparatus sequentially moves to each of a plurality of divided areas obtained by dividing a liquid application area and discharges liquid to connect images. The imager reads a reference position set in an area where end portions of the plurality of divided areas overlap with each other. The image connection measuring unit sets the reference position to a reference origin of image writing.

Embodiments of the present disclosure described herein provide a novel liquid discharge method to be executed in a liquid application apparatus. The liquid discharge method includes moving, reading, and setting. The moving sequentially moves the liquid application apparatus to each of a plurality of divided areas obtained by dividing a liquid application area and to discharge liquid to connect images. The reading reads, by an imager, a reference position set in an area where end portions of the plurality of divided areas overlap with each other. The setting sets the reference position to a reference origin of image writing.

Embodiments of the present disclosure described herein provide a novel carrier medium carrying computer-readable program code that causes a liquid application apparatus, to perform moving, reading, and setting. The moving sequentially moves the liquid application apparatus to each of a plurality of divided areas obtained by dividing a liquid application area and to discharge liquid to connect images. The reading reads, by an imager, a reference position set in an area where end portions of the plurality of divided areas overlap with each other. The setting sets the reference position to a reference origin of image writing.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIGS. 1A and 1B are diagrams illustrating a configuration of a liquid application apparatus according to an embodiment of the present disclosure;
FIG. 2 is a block diagram illustrating a hardware configuration of an arithmetic device of the liquid application apparatus according to an embodiment of the present disclosure;
FIGS. 3A, 3B, and 3C are diagrams illustrating an example in which the liquid application apparatus prints outside a carriage scanning range, according to an embodiment of the present disclosure;
FIG. 4 is a functional block diagram illustrating functions of the liquid application apparatus according to an embodiment of the present disclosure;
FIG. 5 is a flowchart illustrating a printing process in the arithmetic device, according to an embodiment of the present disclosure;
FIGS. 6A and 6B are diagrams illustrating a first setting example of a reference position, according to an embodiment of the present disclosure;
FIGS. 7A and 7B are diagrams illustrating an example in which the liquid application apparatus reads a road surface condition at a reference position to use as a reference for a start position of image writing, according to an embodiment of the present disclosure;
FIGS. 8A and 8B are diagrams illustrating a second setting example of the reference position, according to an embodiment of the present disclosure;
FIGS. 9A and 9B are diagrams illustrating a third setting example of the reference position, according to an embodiment of the present disclosure;
FIGS. 10A and 10B are diagrams illustrating a fourth setting example of the reference position, according to an embodiment of the present disclosure; and
FIGS. 11A and 11B are diagrams illustrating a fifth setting example of the reference position, according to an embodiment of the present disclosure.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Hereinafter, a liquid application apparatus, a liquid application method, and a storage medium according to embodiments of the present disclosure are described with reference to the drawings.

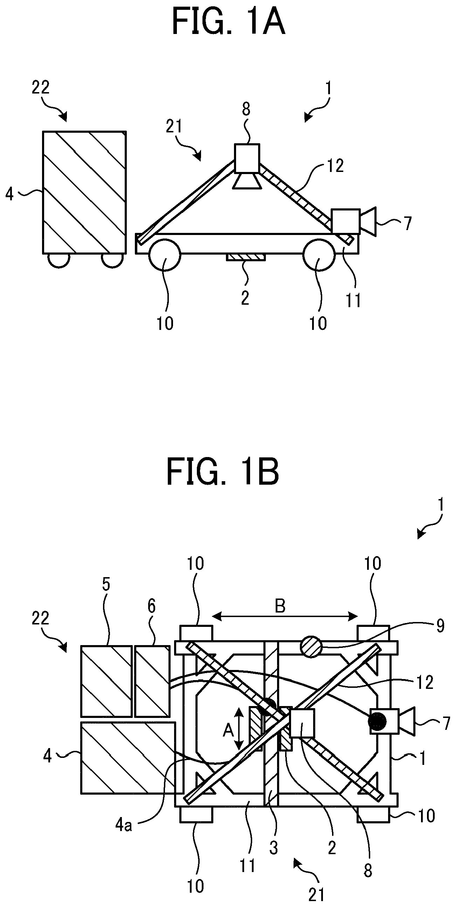

FIGS. 1A and 1B are diagrams illustrating a configuration of a liquid application apparatus 1 according to an embodiment of the present disclosure. FIG. 1A is a side view of the liquid application apparatus 1, and FIG. 1B is a plan view of the liquid application apparatus 1 as viewed from above according to an embodiment of the present disclosure. The liquid application apparatus 1 illustrated in FIG. 1 is a liquid application apparatus that sequentially moves to each of a plurality of divided areas obtained by dividing a wide printing area such as a road surface or a wall surface. The liquid application apparatus 1 divides a large shape (a pattern, a symbol, or a line) into a plurality of segments and performs printing. Note that "print" is referred to apply or spray liquid to, for example, a road surface or a wall surface.

As illustrated in FIG. 1, the liquid application apparatus 1 includes a printer 21 and a controller 22. The printer 21 included in the liquid application apparatus 1 includes an ink discharge head 2 (carriage) that is a liquid discharge head to discharge ink for printing. In other words, the ink discharge head 2 is configured to discharge liquid. The plurality of ink discharge heads 2 (carriage) is provided in the printer 21 and used for various colors and multipurpose. The "ink" is liquid to be applied or sprayed to a road surface or a wall surface. The printer 21 has a gantry structure in which the ink discharge head 2 (carriage) is movable in the directions of arrow A in FIG. 1B on a rail 3 horizontally disposed in a housing 11. Although the liquid application apparatus 1 according to the present embodiment includes the printer 21 and the controller 22, the liquid application apparatus 1 may have a system configuration in which the printer 21 and the controller 22 are separated.

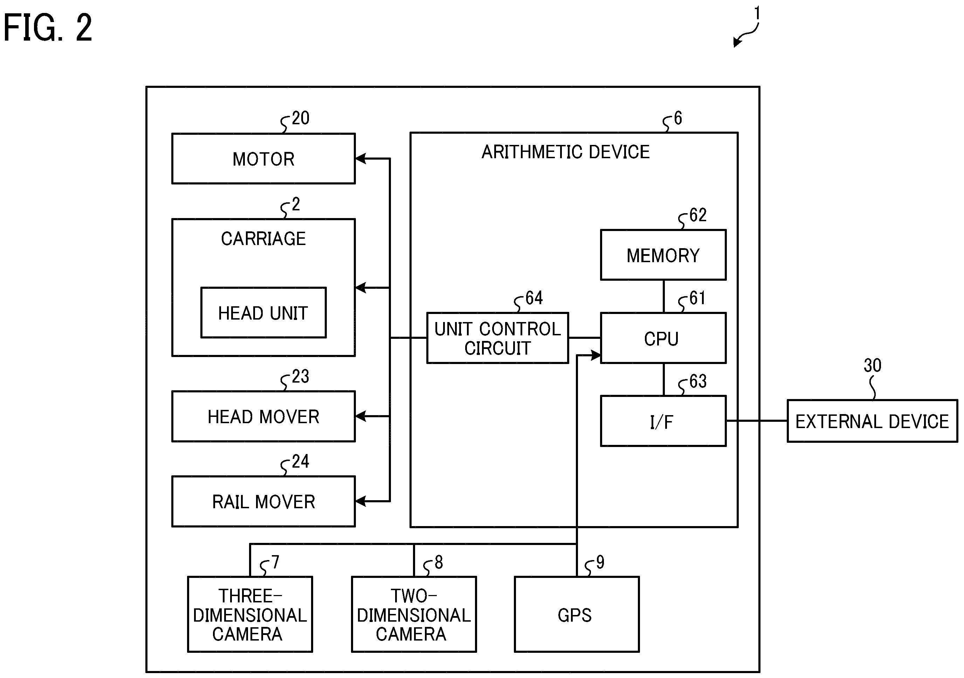

The printer 21 includes a plurality of tires 10 and a motor 20 (see FIG. 2) in a lower portion of the housing 11. The printer 21 can move in four directions of front, rear, left, and right by rotation control of the tires 10 by the motor 20.

The ink discharge head 2 (carriage) includes a head mover 23 (see FIG. 2) using a belt, a pulley, and a motor. The head mover 23 reciprocates the ink discharge head 2 (carriage) in the directions of arrow A along the rail 3 of the printer 21. The rail 3 includes a rail mover 24 (see FIG. 2) using a belt, a pulley, and a motor. The rail mover 24 reciprocates the ink discharge head 2 on the rail 3 along the housing 11 of the printer 21 in directions (indicated by arrow B in FIG. 1B) orthogonal to the longitudinal direction of the rail 3. In other words, the ink discharge head 2 (carriage) can freely move in the left-right directions (X scanning directions) that are indicated by arrow A and the front-rear directions (Y scanning directions) that are indicated by arrow B in the horizontal direction in the housing 11 of the liquid application apparatus 1.

The controller 22 of the liquid application apparatus 1 includes an ink supplier 4 that supplies ink used for printing. The ink supplier 4 is connected to the ink discharge head 2 (carriage) through a pipe 4a serving as an ink channel. Although the ink supplier 4 moves following the printer 21 in the present embodiment, the present disclosure is not limited to such configuration, and the ink supplier 4 may move independently from the printer 21.

The controller 22 includes a power supplier 5 that supplies electric power for driving the head mover 23, the rail mover 24, the motor 20, and the ink discharge head 2 (carriage) of the printer 21. Since the power supplier 5 is used outside the controller 22 and supplies power to components other than the head mover 23, the rail mover 24, the motor 20, and the ink discharge head 2 (carriage) of the printer 21, the power supplier 5 is preferably a large-capacity storage battery.

The controller 22 includes an arithmetic device 6 that performs drive control of the head mover 23, the rail mover 24, the motor 20, and the ink discharge head 2 (carriage) of the printer 21 and estimates the self-position of the liquid application apparatus 1 based on the coordinate data acquired from a global positioning system (GPS) 9.

Further, the printer 21 includes a three-dimensional camera 7, which is a three-dimensional shape measuring device for ambient measurement that captures surrounding images of the liquid application apparatus 1, in a front portion of the housing 11. The three-dimensional camera 7 sends the captured images to the arithmetic device 6. The arithmetic device 6 uses the images captured by the three-dimensional camera 7 mainly for avoiding contact with an obstacle by using a method such as image correlation. In addition, the arithmetic device 6 uses the images captured by the three-dimensional camera 7 to estimate a movement amount and a posture of the liquid application apparatus 1. Note that the three-dimensional camera 7 is supplied with power from its own battery. However, the three-dimensional camera 7 may be supplied with power from the power supplier 5 on the assumption of continuous operation.

The printer 21 includes a two-dimensional camera 8 as an imager for capturing images of the road surface and the vicinity of the painted image. The two-dimensional camera 8 is disposed at the apex of a structure 12 formed by assembling pipes in a quadrangular pyramid shape. The two-dimensional camera 8 sends the captured images to the arithmetic device 6. The arithmetic device 6 uses the images captured by the two-dimensional camera 8 to estimate an amount of movement and a speed of the ink discharge head 2 (carriage) and the rail 3 using a method such as the image correlation. Note that the two-dimensional camera 8 is supplied with power from its own battery. However, the two-dimensional camera 8 may be supplied with power from the power supplier 5 on the assumption of continuous operation.

The liquid application apparatus 1 includes the GPS 9 that measures a current position of the liquid application apparatus 1 on the earth. The GPS 9 sends acquired coordinate data of the liquid application apparatus 1 to the arithmetic device 6. The arithmetic device 6 stores the acquired coordinate data by the GPS 9 as odometry information such as a cumulative movement amount of the liquid application apparatus 1. Note that the liquid application apparatus 1 may include a plurality of GPSs 9, and the arithmetic device 6 may correct errors of the coordinate data based on a difference between the coordinate data acquired by the plurality of GPSs 9.

Next, a description is given of a hardware configuration of the arithmetic device 6 includes in the liquid application apparatus 1.

FIG. 2 is a block diagram illustrating the hardware configuration of the arithmetic device 6 included the liquid application apparatus 1. As illustrated in FIG. 2, the arithmetic device 6 includes a central processing unit (CPU) 61, a memory 62 that includes a read only memory (ROM) and a random access memory (RAM), an input-and-output interface (I/F) 63, and a control circuit 64. These units and components are electrically connected to each other through a system bus.

The CPU 61 comprehensively controls an operation of the liquid application apparatus 1. The CPU 61 performs drive control of the head mover 23, the rail mover 24, the motor 20, and the ink discharge head 2 (carriage) of the printer 21 through the control circuit 64 and estimates the self-position of the liquid application apparatus 1 based on the coordinate data acquired by the GPS 9.

The CPU 61 uses the images captured by the three-dimensional camera 7 for estimation of the movement amount and the posture of the liquid application apparatus 1. The CPU 61 uses the images captured by the two-dimensional camera 8 to estimate the amount of movement and the speed of the ink discharge head 2 (carriage) and the rail 3 using a method such as the image correlation. The CPU 61 stores the coordinate data acquired by the GPS 9 as odometry information such as a cumulative movement amount of the liquid application apparatus 1.

The memory 62 stores programs that are used to boot the CPU 61. The memory 62 is used as a work area of the CPU 61.

The I/F 63 is an interface to connect various external devices 30 such as tablet terminals, smartphones, personal computers, servers, and laptop personal computers.

As described above, the liquid application apparatus 1 can move in four directions, i.e., front, rear, left, and right directions. The ink discharge head 2 (carriage) can scan for printing in four directions of front, rear, left, and right inside the housing 11 of the liquid application apparatus 1.

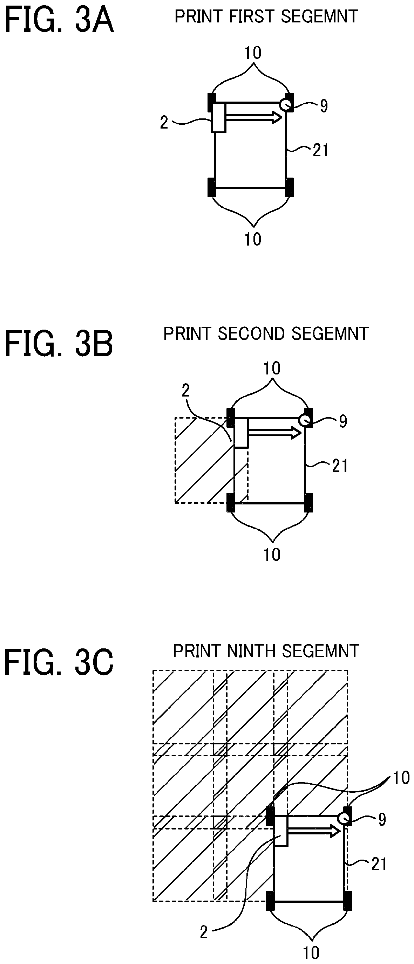

FIGS. 3A, 3B, and 3C are diagrams illustrating an example in which the liquid application apparatus 1 prints outside a carriage scanning range, according to an embodiment of the present disclosure. When the liquid application apparatus 1 prints an image outside the carriage scanning range of the ink discharge head 2 (carriage), the liquid application apparatus 1 divides the entire image into a plurality of segments as illustrated in FIG. 3C and provides an overlapping area between images of adjacent segments to complete printing the image while moving the liquid application apparatus 1.

Next, descriptions are given of characteristic functions operated by the liquid application apparatus 1 in the above-described printing process.

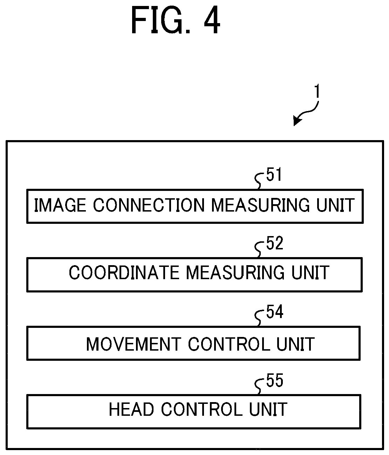

FIG. 4 is a functional block diagram illustrating functions of the liquid application apparatus 1 according to an embodiment of the present disclosure. All or any part of the processing functions performed by the functional blocks illustrated in FIG. 4 may be implemented by programs executed by the CPU 61 of the arithmetic device 6 or may be implemented by a hardware such as wired logic.

As illustrated in FIG. 4, in order to divide the entire image into a plurality of segments for printing, the liquid application apparatus 1 includes a movement control unit 54, a head control unit 55, an image connection measuring unit 51, and a coordinate measuring unit 52.

The movement control unit 54 controls the sequential movement of the liquid application apparatus 1 to each of a plurality of divided areas obtained by dividing a liquid application area in which the ink discharge head 2 (carriage) performs liquid application. More specifically, the movement control unit 54 controls the sequential movement of the liquid application apparatus 1 to an adjacent or a partially-overlapping divided area.

The head control unit 55 controls the movement of the ink discharge head 2 (carriage) in X and Y scanning directions in each divided area to perform liquid application. The head control unit 55 does not perform a liquid application operation in a case where the divided area does not have application data. In this way, when the head control unit 55 does not perform the liquid application operation due to no application data to be applied to the divided area, the movement control unit 54 controls the movement to the next adjacent or partially-overlapping divided area.

The image connection measuring unit 51 reads a reference position (start position of image writing) set in an area where end portions of divided areas obtained by dividing the entire image into a plurality of segments overlap with each other by the two-dimensional camera 8 and sets the reference position as a reference origin of image writing.

The coordinate measuring unit 52 measures the self-position coordinates (position and posture) of the liquid application apparatus 1 by a self-position estimation method in which global navigation satellite system (GNSS) measurement using the GPS 9 and an image (surrounding image data) captured by the three-dimensional camera 7 are combined.

Hereinafter, descriptions are given of a printing process of completing an image while the liquid application apparatus 1 moves.

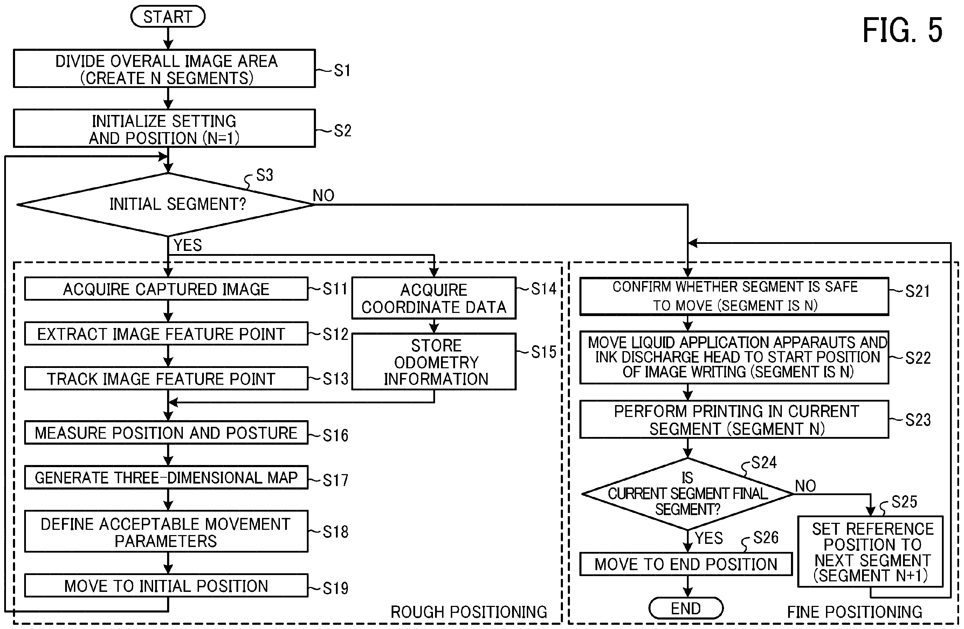

FIG. 5 is a flowchart illustrating the printing process in the arithmetic device 6, according to an embodiment of the present disclosure.

When the liquid application apparatus 1 performs printing in a wide printing aera such as a road surface, an image to be printed is larger than the printing area in a state where the liquid application apparatus 1 stops moving. In such a case, as illustrated in FIG. 5, the arithmetic device 6 divides the entire image into a plurality of (N) segments (step S1). Note that the arithmetic device 6 provides an overlapping area between images of adjacent segments such that the segments overlap each other. More specifically, the arithmetic device 6 sets a road surface reference position A to be included in a plurality of segments. Details of the blurring processing on the overlapping area is described later.

The process of dividing the entire image into a plurality of (N) segments may be performed by an external device 30.

Next, when the number of divisions is determined, in step S2, the arithmetic device 6 prepares a movement based on initial settings (ink discharge conditions, carriage speed of main scanning and sub-scanning) and an initial position (segment 1 (n=1) is set as an area in which an image is first formed).

Next, in step S3, the arithmetic device 6 determines whether the current target segment is the initial segment (segment 1).

When the arithmetic device 6 determines that the current target segment is the initial segment (segment 1) (YES in step S3), the liquid application apparatus 1 proceeds the operation to a processing routine for performing rough positioning.

As illustrated in FIG. 5, when the current target segment is the initial segment (segment 1), the arithmetic device 6 acquires an image (surrounding image) captured by the three-dimensional camera 7 (step S 11), extracts image feature points (step S12), and tracks the image feature points (step S 13).

In addition, when the current target segment is the initial segment (segment 1), the arithmetic device 6 causes the coordinate measuring unit 52 to acquire the coordinate data (step S14), and the arithmetic device 6 stores the acquired coordinate data as the odometry information such as the cumulative movement amount of the liquid application apparatus 1 (step S15).

Next, the arithmetic device 6 performs the rough positioning (in centimeters) and measures the posture of the liquid application apparatus 1 based on the tracked image features and the stored odometry information (step S16).

Next, the arithmetic device 6 generates a three-dimensional map (step S17), defines acceptable movement parameters (step S18), and moves the liquid application apparatus 1 to the initial position (step S19).

On the other hand, when the arithmetic device 6 determines that the current target segment is any other segment (of the segment 2 to the segment N) than the initial segment (NO in step S3), the liquid application apparatus 1 proceeds the operation to a processing routine for performing fine positioning.

When the current target segment is any other segment (of the segment 2 to the segment N) than the initial segment, the arithmetic device 6 confirms safety by the three-dimensional camera 7 whether the liquid application apparatus 1 can move to the current segment so that the liquid application apparatus 1 does not come into contact with an obstacle during movement (step S21).

Next, the arithmetic device 6 moves the liquid application apparatus 1 and the ink discharge head 2 (carriage) to the start position of image writing set with high accuracy using the image connection measuring unit 51 that performs measurement with the two-dimensional camera 8 (step S22).

Next, the arithmetic device 6 performs printing in the current segment (moves the carriage of the ink discharge head in the main scanning direction and the sub-scanning direction) (step S23) and determines whether the current segment is the final segment (n=N) (step S24).

When the current segment is not the final segment (NO in step S24), the arithmetic device 6 sets a reference position for the next segment serving as a reference for positioning before moving to the next segment (n=n+1) (step S25) and returns to step S21. A method of setting the reference position is described later.

On the other hand, when the current segment is the final segment (YES in step S24), the arithmetic device 6 moves the liquid application apparatus 1 to an end position (step S26).

In the movement of the liquid application apparatus 1, the positional accuracy is several centimeters when the coordinate measuring unit 52 using GNSS alone is used, and joints of segments in the image may be noticeable. In the present embodiment, after the liquid application apparatus 1 moves, the image connection measuring unit 51 determines the start position of image writing while reading, with the two-dimensional camera 8, the reference position set before the movement of the liquid application apparatus 1. The liquid application apparatus 1 repeats the operations described above. Accordingly, the liquid application apparatus 1 can perform road painting with less noticeable joints of segments in a case where the liquid application apparatus 1 prints a large image. Since the operations include a repetitive process, the operations can be developed to be performed by a robotized automatic operation system. In addition, the operations may be performed by a remote operation.

### Method of Setting Reference Position (Start Position of Image Writing)

Next, descriptions are given of several examples of a method of setting a reference position (start position of image writing) serving as a reference of a position when the liquid application apparatus 1 forms an image of the next segment.

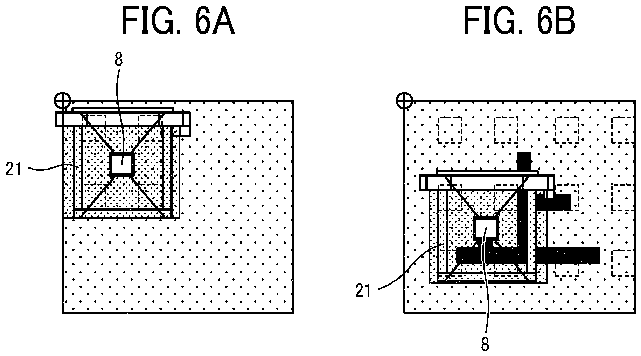

FIGS. 6A and 6B are diagrams illustrating a first setting example of the reference position, according to an embodiment of the present disclosure. As illustrated in FIG. 6, in the first setting example of the reference position, the liquid application apparatus 1 sets end portions of the divided areas (segments) such that the end portions overlap with each other. The image connection measuring unit 51 reads a road surface condition (reference position) of the overlapping area with the two-dimensional camera 8, estimates the self-position of the liquid application apparatus 1 based on the read information, and sets the self-position as the reference origin for the start position of image writing. Specific descriptions are given as follows.

The two-dimensional camera 8 reads road surface information (road surface condition) at four corners of an image forming area to be painted (dotted square frames in FIG. 6).

The liquid application apparatus 1 is moved such that one or more of the four dotted square frames are included in an image capturing area of the two-dimensional camera 8 (using GNSS information).

The liquid application apparatus 1 extracts the road surface conditions (dotted square frame areas) from two-dimensional images, which is captured with the two-dimensional camera 8, before and after the movement, and performs position detection (fine position estimation).

According to the first setting example of the reference position, information such as detection mark, chalk line, and end portion of character in the preceding area are not needed, and thus an effect of reducing the number of steps can be obtained. For the overlapped road surface information, in the case of asphalt, grain-size-adjusted crushed stones adjusted to a good aggregate grain size or a stabilization treatment material obtained by mixing crushed stones with cement or lime is used for the upper roadbed material. Accordingly, a characteristic pattern is formed on the road surface by a combination of crushed stones and asphalt. Such patterns are recorded as the road surface information (road surface condition) and used for positioning.

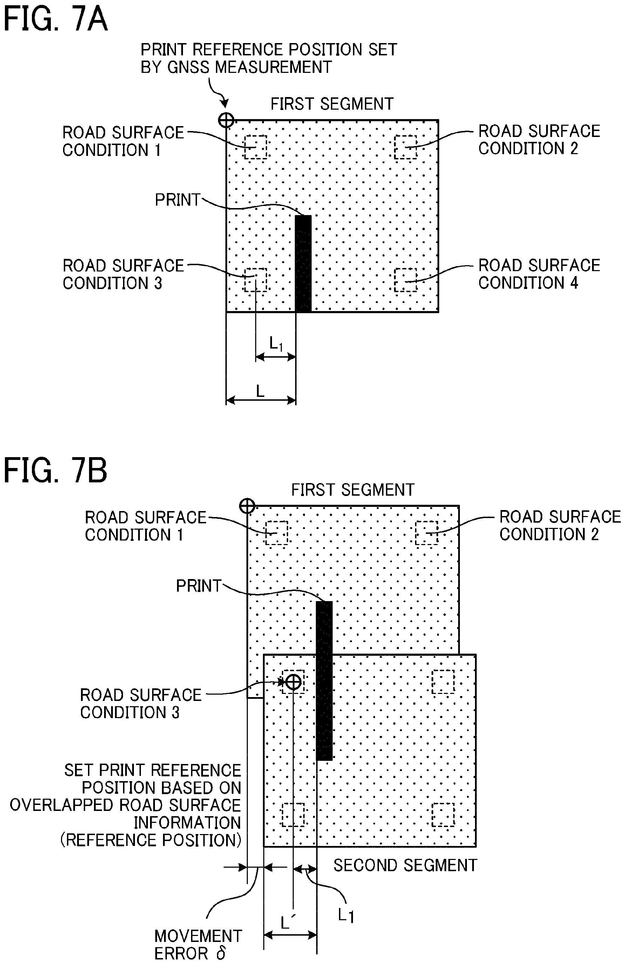

FIGS. 7A and 7B are diagrams illustrating an example in which the liquid application apparatus 1 reads the road surface condition at the reference position to use as a reference for the start position of image writing, according to an embodiment of the present disclosure. In other words, the road surface condition is road surface information of a surface of a liquid application target. FIG. 7A illustrates a state before the movement, and FIG. 7B illustrates a state after the movement. As illustrated in FIG. 7A, printing of a first segment is performed with reference to an edge of the image forming area (set by GNSS measurement). In this case, the start position of image writing is at a distance L from the edge of the image forming area. On the other hand, the liquid application apparatus 1 also recognizes the positional relation between the start position of image writing and the road surface condition. For example, the start position of image writing is at a distance L1 from the center of road surface condition 3 in FIG. 7A. On the other hand, as illustrated in FIG. 7B, when the liquid application apparatus 1 moves to the second segment, a movement error σ may occur. In this case, a print reference position of the road surface condition 3 of the overlapping area is set, the start position of image writing of the second segment is at a distance L1 from the print reference position, and thus image formation without a joint error is performed.

Note that a method of stopping the self-propelled liquid application apparatus 1 with reference to the read position may also be applied. In this case, the writing reference position in the liquid application apparatus 1 can be fixed. The former corrects the start position of image writing, and the latter corrects the stop position of the self-propelled liquid application apparatus 1.

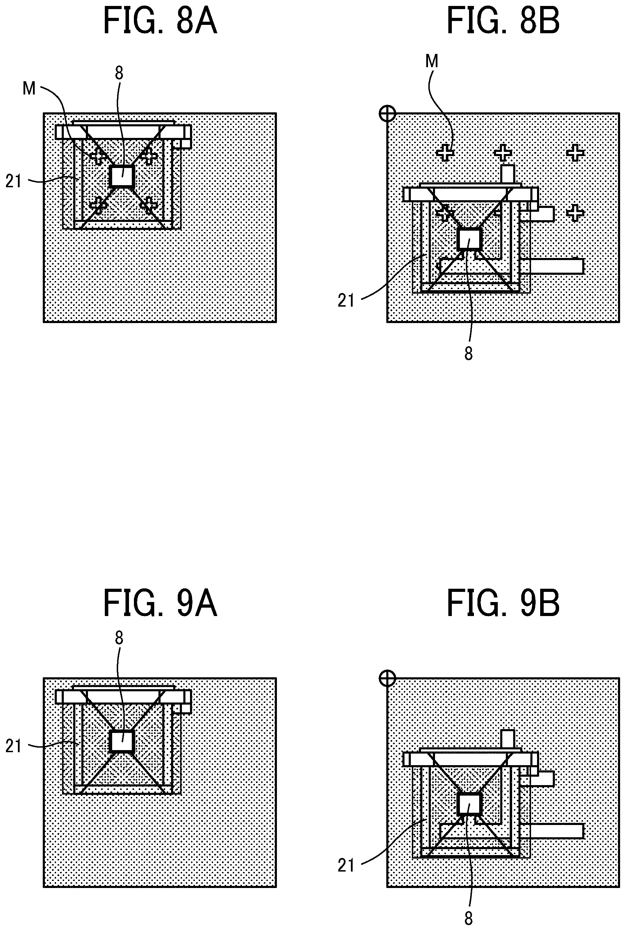

FIGS. 8A and 8B are diagrams illustrating a second setting example of the reference position, according to an embodiment of the present disclosure. As illustrated in FIGS. 8A and 8B, in the second setting example of the reference position, the liquid application apparatus 1 prints the reference positions that are detection marks M at the four corners of an image. The image connection measuring unit 51 causes the two-dimensional camera 8 to read the detection marks M, estimates the self-position of the liquid application apparatus 1 based on the read information, and sets the self-position as the reference origin for the start of image writing. Specific descriptions are given as follows.

The ink discharge head 2 (carriage) prints the detection marks M at four corners of an image forming area.

The liquid application apparatus 1 moves such that one or more of the four detection marks M are included in the image capturing area of the two-dimensional camera 8.

The image connection measuring unit 51 estimates positions of the detection marks M based on GNSS information (rough position estimation).

The image connection measuring unit 51 extracts the detection marks M from the two-dimensional image at the center position of the estimated detection marks M to detect the position (fine position estimation).

According to the second setting example of the reference position, since the liquid application apparatus 1 provides the reference positions at the four corners of the printing area of the liquid application apparatus 1, the overlapping area of the printing areas can be reduced. Accordingly, the print time can be reduced.

FIGS. 9A and 9B are diagrams illustrating a third setting example of the reference position, according to an embodiment of the present disclosure. As illustrated in FIGS. 9A and 9B, in the third setting example of the reference position, the liquid application apparatus 1 divides the printing area into a plurality of areas such that printed images are overlapped (connected) in the plurality of areas. The image connection measuring unit 51 causes the two-dimensional camera 8 to read an edge of a character or symbol, i.e., the reference position, estimates the self-position of the liquid application apparatus 1 based on the read information, and sets the self-position as the reference origin for the start of image writing. Specific descriptions are given as follows.

The ink discharge head 2 (carriage) prints an image.

The liquid application apparatus 1 moves such that an edge of a printed image is included in the image capturing area of the two-dimensional camera 8.

The image connection measuring unit 51 estimates the position of the edge of the printed image based on GNSS information (rough position estimation).

The image connection measuring unit 51 extracts the position of the edge of the printed image from a two-dimensional image at the center of the estimated position of the edge of the printed image to detect the position (fine position estimation).

According to the third setting example of the reference position, since a part (edge) of the printed image in the preceding segment is set as the reference position, the operation of setting the reference position (step S25 in FIG. 5) can be simplified.

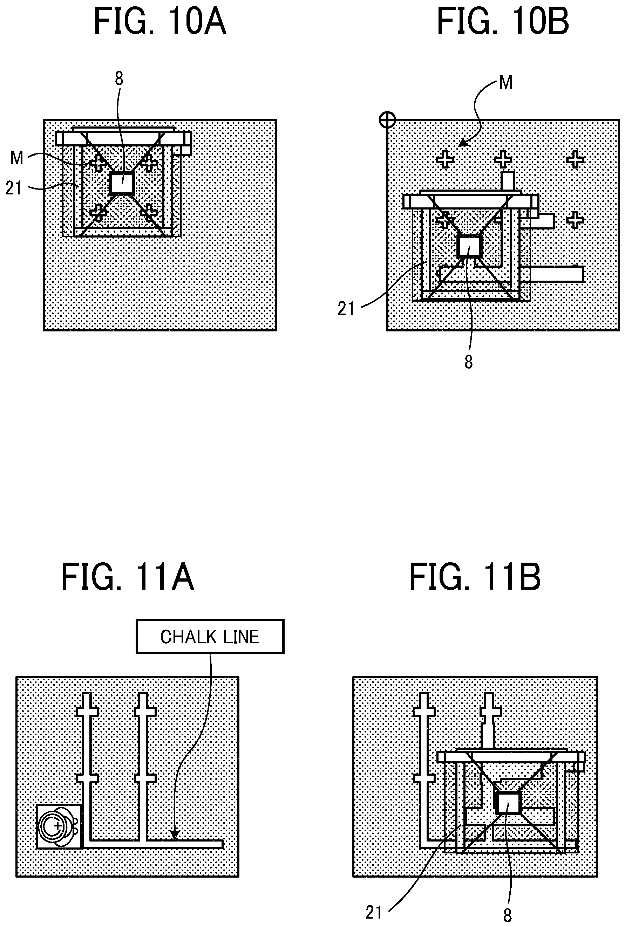

FIGS. 10A and 10B are diagrams illustrating a fourth setting example of the reference position, according to an embodiment of the present disclosure. As illustrated in FIGS. 10A and 10B, in the fourth setting example of the reference position, the liquid application apparatus 1 prints detection marks M (reference position) at four corners of an image by using invisible ink (invisible liquid) that reacts to a special light source alone such as ultraviolet light. The image connection measuring unit 51 causes the two-dimensional camera 8 to read the detection marks M, estimates the self-position of the liquid application apparatus 1 based on the read information, and sets the self-position as the reference origin for the start of image writing. Specific descriptions are given as follows.

The ink discharge head 2 (carriage) prints the detection marks M with invisible ink at four corners of an image forming area.

The liquid application apparatus 1 moves such that one or more of the four detection marks M are included in the image capturing area of the two-dimensional camera 8.

The image connection measuring unit 51 estimates positions of the detection marks M based on GNSS information (rough position estimation).

The image connection measuring unit 51 extracts the detection marks M from the two-dimensional image at the estimated center position of the detection marks M to detect the position (fine position estimation).

According to the fourth setting example of the reference position, the ink is invisible ink. As a result, even when large detection marks M or a large number of detection marks M are printed, the printed detection marks M have no influence on the appearance of the image, thus allowing printing with less noticeable image joints.

FIGS. 11A and 11B are diagrams illustrating a fifth setting example of the reference position, according to an embodiment of the present disclosure. As illustrated in FIGS. 11A and 11B, in the fifth setting example of the reference position, a reference axis is set as the reference position by a chalk line drawn in advance, and the image connection measuring unit 51 causes the two-dimensional camera 8 to read the chalk line, estimates the self-position of the liquid application apparatus 1 based on the read information, and sets the self-position as the reference origin for the start of image writing. Specific descriptions are given as follows.

An operator draws a minimum chalk line on a road surface.

The liquid application apparatus 1 moves such that the chalk line is included in the image capturing area of the two-dimensional camera 8.

The image connection measuring unit 51 estimates the position of the chalk line based on GNSS information (rough position estimation).

The image connection measuring unit 51 extracts the chalk line from the two-dimensional image at the center of the estimated position of the chalk line to detect the position (fine position estimation).

According to the fifth setting example of the reference position, since the chalk line is used as a reference, the overlapping area of printing areas is eliminated, and the printing time is further reduced.

As described above, according to the present embodiment, the liquid application apparatus 1 can perform liquid application to an area exceeding the scanning range of the ink discharge head 2.

According to the present embodiment, the liquid application apparatus 1 implements highly accurate self-position estimation of the liquid application apparatus 1, and thus the liquid application apparatus 1 can perform printing such that joints of divided areas in an image are less noticeable. In particular, since the joints corresponding to end portions of the divided areas, the overlapping area of the printing area can be reduced. As a result, the time for printing the entire image can be reduced. The joints of the divided areas are reduced, and the liquid application apparatus 1 can print a clean image (e.g., a small magnification error or a small skew).

According to the present embodiment, the liquid application apparatus 1 roughly measures the self-position coordinates (position and posture) of the liquid application apparatus 1 by the self-position estimation method in which GNSS measurement using the GPS 9 and an image (ambient image data) captured by the three-dimensional camera 7 are combined. After that, the liquid application apparatus 1 causes the two-dimensional camera 8 to acquire road surface information and precisely estimates the self-position of the ink discharge head 2 (carriage) based on the acquired information. Accordingly, the liquid application apparatus 1 obtains the positional accuracy that is needed for image connection, and thus can automatically perform printing on a wide area.

Note that programs executed by the liquid application apparatus 1 according to the embodiments of the present disclosure are pre-installed and provided in, for example, a read only memory (ROM).

The programs executed by the liquid application apparatus 1 according to the above-described embodiments of the present disclosure may be recorded on a computer-readable recording medium such as a compact disk read only memory (CD-ROM), a flexible disk (FD), a compact disc recordable (CD-R), or a digital versatile disk (DVD) as an installable or executable file and provided.

Further, programs executed by the liquid application apparatus 1 according to the embodiments of the present disclosure may be stored on a computer connected to a network such as the Internet and downloaded via the network to provide the program. Programs executed by the liquid application apparatus 1 according to the embodiments of the present disclosure may be provided or distributed via a network such as the Internet.

In the present disclosure, the term "liquid application apparatus" includes a liquid discharge head or a liquid discharge device (unit) and drives the liquid discharge head to discharge liquid. Examples of the liquid application apparatus include an apparatus capable of discharging liquid to a material to which liquid can adhere and an apparatus to discharge liquid toward gas or into liquid.

The liquid application apparatus can include a unit related to feeding, conveyance, and discharge of an object to which a liquid can adhere, a pretreatment apparatus, a post-treatment apparatus.

Examples of the liquid application apparatus include an image forming apparatus which is an apparatus that forms an image on a sheet by discharging ink, and a stereoscopic fabrication apparatus (three-dimensional fabrication apparatus) which discharges fabrication liquid onto a powder layer in which powder is formed in a layer shape to fabricate a stereoscopic fabrication object (three-dimensional object).

Such a liquid application apparatus is not limited to an apparatus that discharge liquid to visualize meaningful images, such as letters or figures. For example, an apparatus that forms a meaningless pattern, or an apparatus that fabricates a three-dimensional image are also included.

The above-described term "material to which liquid can be adhered" represents a material to which the liquid is at least temporarily adhered, a material to which the liquid is adhered and fixed, or a material into which liquid is adhered to permeate. Examples of the "material to which liquid can be adhered" include recording media, such as sheet of paper, recording paper, recording sheet of paper, film, and cloth, electronic components, such as electronic substrate and piezoelectric element, and media, such as powder layer, organ model, and testing cell. The "material to which liquid can be adhered" includes any material to which liquid is adhered, unless particularly limited.

The material of the above-described "material to which the liquid is adhered" is made of any material provided that liquid is adherable at least temporarily to the material. For example, the "material to which liquid is adhered" may include any materials on which liquid adheres even temporarily, such as paper, threads, fibers, fabric, leather, metal, plastic, glass, wood, and ceramic.

Further, the term "liquid" includes any liquid having a viscosity or a surface tension that is dischargeable from the head. However, preferably, the viscosity of the liquid is not greater than 30 mPa·s under ordinary temperature and ordinary pressure or by heating or cooling. Examples of the liquid include a solution, a suspension, or an emulsion including, for example, a solvent such as water or an organic solvent, a colorant such as dye or pigment, a functional material such as a polymerizable compound, a resin, a surfactant, a biocompatible material such as deoxyribonucleic acid (DNA), amino acid, protein, or calcium, and an edible material such as a natural colorant. Such a solution, a suspension, or an emulsion can be used for, e.g., inkjet ink; surface treatment liquid; a liquid for forming an electronic element component, a light-emitting element component, or an electronic circuit resist pattern; or a material solution for three-dimensional fabrication.

The liquid application apparatus can be an apparatus in which the liquid discharge head and a material to which liquid can adhere move relatively to each other. However, the liquid application apparatus is not limited to such an apparatus. For example, the liquid application apparatus may include a printing device including a serial head device that moves the liquid discharge head or a line head device that does not move the liquid discharge head.

Other examples of the liquid application apparatus include a treatment liquid application apparatus that discharges treatment liquid to a sheet to apply the treatment liquid to the surface of the sheet for the purpose of modifying the surface of the sheet, and an injection granulation apparatus that injects composition liquid in which a raw material is dispersed in a solution through a nozzle to granulate fine particles of the raw material.

The embodiments described above are presented as examples and are not intended to limit the scope of the present disclosure. The above-described embodiments can be implemented in other various forms, and various omissions, replacements, and changes can be made without departing from the scope of the present disclosure. In addition, the embodiments and modifications or variations thereof are included in the scope and the gist of the present disclosure.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. A liquid application apparatus (1) configured to sequentially move to each of a plurality of divided areas obtained by dividing a liquid application area and to discharge liquid to connect images, the liquid application apparatus (1) comprising:
an imager (8) configured to read a reference position set in an area where end portions of the plurality of divided areas overlap with each other; and
an image connection measuring unit (51) configured to set the reference position to a reference origin of image writing.

2. The liquid application apparatus (1) according to claim 1,
wherein the image connection measuring unit (51) is configured to set the reference position to road surface information of a surface of a liquid application target.

3. The liquid application apparatus (1) according to claim 1,
wherein the image connection measuring unit (51) is configured to set the reference position to a detection mark (M) on a surface of a liquid application target.

4. The liquid application apparatus (1) according to claim 1,
wherein the image connection measuring unit (51) is configured to set the reference position to a liquid applied image on a surface of a liquid application target.

5. The liquid application apparatus (1) according to claim 1,
wherein the image connection measuring unit (51) is configured to set the reference position to a detection mark (M) of invisible liquid on a surface of a liquid application target.

6. The liquid application apparatus (1) according to claim 1,
wherein the image connection measuring unit (51) is configured to set the reference position to a chalk line extending in at least two divided areas of the plurality of divided areas.

7. The liquid application apparatus (1) according to claim 1,
wherein the image connection measuring unit (51) is configured to set the reference position to an edge of the liquid application area when liquid application is started for a first one of the plurality of divided areas.

8. A liquid application method to be executed in a liquid application apparatus (1), the method comprising:
sequentially moving the liquid application apparatus (1) to each of a plurality of divided areas obtained by dividing a liquid application area and to discharge liquid to connect images;
reading, by an imager (8), a reference position set in an area where end portions of the plurality of divided areas overlap with each other; and
setting the reference position to a reference origin of image writing.

9. A carrier medium carrying computer-readable program code that causes a liquid application apparatus (1), to perform:
sequentially moving the liquid application apparatus (1) to each of a plurality of divided areas obtained by dividing a liquid application area and to discharge liquid to connect images;
reading, by an imager (8), a reference position set in an area where end portions of the plurality of divided areas overlap with each other; and
setting the reference position to a reference origin of image writing.
